# EUROPEAN PATENT APPLICATION

(11) **EP 1 095 910 A1**
(43) Date of publication of application: **02.05.2001**
(21) Application number: 00308214.6
(22) Date of filing: 20.09.2000
(51) Int. Cl.: C02F 1/50

(54) **All-in-one water treatment system**

(30) Priority: 29.10.1999 US 430658
(71) Applicant: GREAT LAKES CHEMICAL CORPORATION, West Lafayette Indiana 47906 (US)
(72) Inventor: Burch, Charmita, Avondale Estates, Georgia 30002 (US); Newton, Michael Scott, Peachtree City, Georgia 30269 (US); Garris, John P., Suwanee, Georgia 30024 (US); Carlyle, Stephen L., Liburn, Georgia 30247 (US)
(74) Representative: Atkinson, Peter Birch

(57) **Abstract**

An all-in-one water treatment system that combines a slow-dissolving sanitizer and a shock-treatment composition in a single system. The all-in-one water treatment system can be used to treat recreational water, and eliminates the need to handle and monitor separate products.

## Description

### FIELD OF THE INVENTION

The present invention relates generally to systems for treating water, and more particularly to an all-in-one system for simultaneously treating water with slow-dissolving and fast-dissolving halogen-source compositions.

### BACKGROUND OF THE INVENTION

Data provided by the National Spa and Pool Institute (NSPI) indicates that free chlorine levels in swimming pool water should ideally be about 2-4 parts per million (ppm) for proper sanitation. As is known to the art, chlorine levels can be maintained at that level with slow-dissolving, formulations of solid chlorine-containing compounds such as trichloroisocyanuric acid ("TCCA") or bromochlorodimethylhydantoin ("BCDMH").

Even when slow-release sanitizers are used though, environmental factors and periods of high usage may still lead to a build-up of organic wastes in pools. Accordingly, it is often necessary to "shock treat" the water with larger amounts of halogen for a short amount of time to oxidize those accumulated wastes. For most recreational applications such as swimming pools, a weekly shock treatment of rapidly dissolving chlorine granules (or a concentrated chlorine solution) is recommended.

In addition to basic halogen treatment, it is often desired to add other chemicals, such as fungicides, algicides, and clarifiers, to the water to enhance its quality. For example, copper salts are known to be effective algicides, while boron-containing compounds (such as sodium tetraborate pentahydrate) are known to provide both algicidal and fungicidal properties. Aluminum sulfate (alum), potassium aluminum sulfate and polyacrylates may be employed as clarifiers, flocculents, sequesterants, etc., in some formulations.

Since consumers generally prefer simple, easy-to-use products that provide a multiplicity of functions, it would be advantageous to have a single water treatment product that could provide both slow-dissolving (maintenance sanitation) and fast-dissolving (shock treatment) formulations of oxidizing halogen. If the products could also provide the fungicidal, algicidal, and clarifying properties of copper, borax and alum, so much the better. Unfortunately however, known slow-dissolving halogen oxidizers are generally incompatible with known shock-treatment oxidizers, so they have not been combined in a single dosage form.

In view of the above, it can be seen that a need presently exists for a multi-functional water treatment system that provides a variety of water treatment components in a single, economical, easy-to-use delivery unit. The present invention addresses this need.

### SUMMARY OF THE INVENTION

Briefly describing one aspect of the present invention, there is provided an "all-in-one" sanitizer system that includes slow-release and fast-release halogen oxidizers in one package. The system preferably includes a slow-release formulation of a halogen-containing oxidizer such as TCCA and/or BCDMH, and a fast-release formulation of that same halogen-containing oxidizer. In the most preferred embodiments the slow-release formulation is made by combining the TCCA or BCDMH with an erosion control agent such as glycoluril, while the fast release formulation is made by combining the TCCA or BCDMH with a dissolution aid such as a polyacrylate. Boron-containing compounds, and/or copper-containing compounds, may be included with either or both of the halogen oxidizer formulations. Aluminum-containing compounds such as aluminum sulfate are also optionally included.

One object of the present invention is to provide an all-in-one water treatment system that provides slow-release sanitation and shock treatment to water, thereby obviating the need for the consumer to keep track of, and handle, separate products.

Further objects, features, aspects, forms, embodiments, advantages and benefits shall become apparent from the following description.

### BRIEF DESCRIPTION OF THE DRAWINGS

FIG. 1 is a perspective view of one embodiment of a container for enclosing the water treatment compositions of the present invention.
FIGS. 2A-C are exploded perspective views of one embodiment of an inner housing of the container of FIG. 1
FIGS. 3A-D are exploded perspective views of one embodiment of an outer housing of the container of FIG. 1

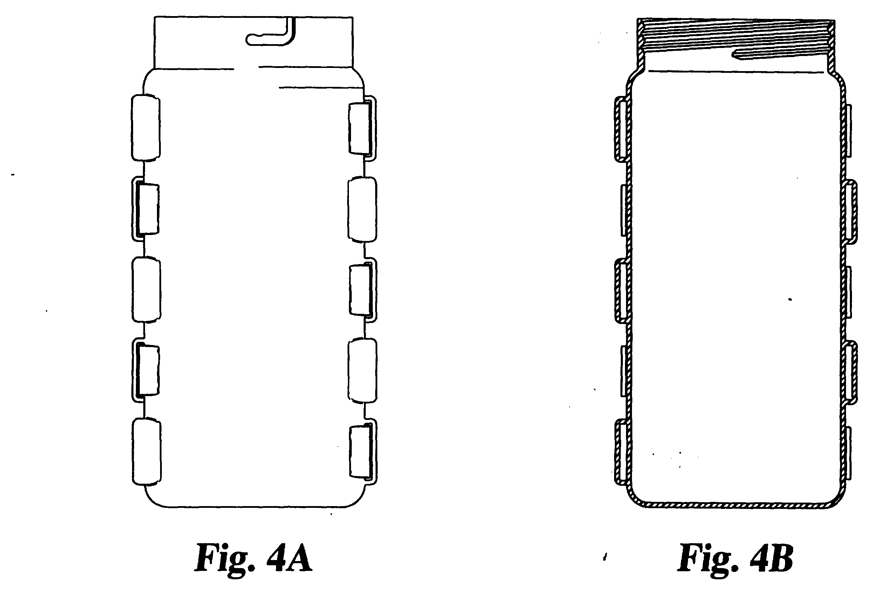

FIGS. 4A-B are perspective views of the outer housing of FIGS. 3A-D.
FIG. 5 is a graph plotting the chlorine concentration maintained according to the present invention in a 20,000 gal. pool versus time.
FIG. 6 is a graph plotting the chlorine concentration maintained in a 20,000 gal. pool according to the present invention maintained at 90°F versus time.

### DETAILED DESCRIPTION OF THE INVENTION

For the purposes of promoting an understanding of the principles of the invention, reference will now be made to the preferred embodiments and specific language will be used to describe the same. It will, nevertheless, be understood that no limitation of the scope of the invention is thereby intended. Any alterations and further modifications in the described processes, systems, or devices and any further applications of the principles of the invention as described herein are contemplated as would normally occur to one skilled in the art to which the invention relates.

As indicated above, the prior art has long recognized a need for a simple, all-in-one water treatment system that would provide both long-term and shock-treatment levels of halogen to water. Unfortunately, the sustained-release sanitizers known to the art, (e.g., TCCA, BCDMH, etc.) are generally incompatible with popular rapid-release oxidizers (e.g., dichloroisocyanuric acid, calcium hypochlorite, and lithium hypochlorite).

The present invention solves the above problem by formulating a single species of halogenated isocyanuric acid, or a single species of halogenated hydantoin, as both slow-release and rapid-release formulations, and then packaging the two formulations together. The slow-release halogen oxidizer is then available to provide long-term sanitation to the water, while the fast-release halogen oxidizer is primarily targeted to provide shock treatment to the water.

Most preferably, a halogen oxidizer that is normally a slow-release composition (such as TCCA or BCDMH) is formulated as a rapid-release solid product, and is then packaged with its corresponding, slow-release formulation. A single package can then be used to store and deliver both slow-release and rapid-release formulations ― without the corresponding incompatibility problems.

Without intending to limit the broadest aspects of the invention, slow-release formulations of halogen oxidizer are generally formulations that provide sanitizingly effective levels of halogen to water for an extended period of time. In the most common swimming pool applications, sanitizingly effective (or "maintenance") levels of halogen are generally in the 1-5 ppm range for chlorine, or the 0.3-5.0 ppm range for bromine, although lesser or greater amounts may be used. An "extended" period of time for swimming pool applications is generally understood to mean at least several days ― and preferably at least a week.

Because of differences in halogen demand for various water systems, it is often preferable to describe slow-release formulations in terms of how fast they dissolve, rather than how long they provide halogen to the water. Accordingly, slow-release TCCA formulations are generally those which dissolve at rates slower than about 10 g/hour. Slow-release dissolution rates for other halogenated isocyanuric acids, and for halogenated hydantoins, are known to the art or can be determined without undue experimentation.

Similarly, fast-release formulations of halogen oxidizers are considered to be formulations that provide shock treatment levels of halogen to water for relatively brief periods of time. In the most common swimming pool applications, shock treatment levels of halogen are generally levels that are 2-10 ppm higher than "maintenance" sanitation levels. These are only general guidelines though, lesser or greater amounts may be used. (For example, a pool having a 0.4 ppm maintenance level of bromine may be shocked by raising the bromine level to 1.5 ppm, a 4x increase, while a water system using a 10 ppm maintenance level of chlorine may require 25 ppm chlorine, or more, to be effectively shocked.) A "brief" period of time for swimming pool applications is generally understood to mean no more than several days ― and preferably no more than several hours.

For the reasons noted above, the fast-release formulations may also be defined in terms of how fast they dissolve, rather than how long they provide halogen to the water. Accordingly, fast-release TCCA formulations are formulations that dissolve at rates greater than about 10 g/hour. As indicated above, dissolution rates for other fast-release halogenated isocyanuric acids, and for halogenated hydantoins, can be determined without undue experimentation.

Regardless of whether the slow-release and fast-release formulations are defined by their rates of dissolution or by the amount of halogen they provide to the water, it is to be understood that the slow-release and fast-release formulations will have significantly different dissolution profiles. In the most preferred embodiment, the fast-release formulation will dissolve several times faster than the slow-release formulation when provided to normal swimming pool water.

More specifically describing the slow-dissolving sanitizer of the present invention, the slow-dissolving sanitizer preferably includes about 50 to about 95 weight percent (wt %) halogen-containing oxidizer, more preferably about 65 to about 90 wt % oxidizer, in a slow-release formulation. The halogen-containing oxidizer used in the slow-release formulation is preferably a halogenated hydantion and/or a halogenated isocyanuric acid, or a salt thereof, although other halogen-containing oxidizers may be used.

Examples of halogenated isocyanuric acids useful with this invention include, but are not limited to, trichloro-1,3,5-triazine-2,3,6-trione (also called trichloroisocyanuric acid, or TCCA), and dichloro-1,3,5-triazine-2,3,6-trione (also called dichloroisocyanuric acid), and salts thereof. Examples of halogentated hydantions useful in this invention include, but are not limited to, 1-bromo-3-chloro-5,5-dimethylhydantoin (BCDMH), 1-3-dichloro-5,5-dimethylhydantoin, 1-3-dibromo-5,5-dimethylhydantoin, 1-3-dichloro-5-ethyl-5-methylhydantoin, etc. In the most preferred embodiment the slow-dissolving sanitizer is trichloroisocyanuric acid.

The slow-dissolving formulation also preferably includes about 0.2 to about 15 wt % of an erosion-control agent. More preferably, about 0.5 to about 7 wt % of an erosion-control agent is used. The erosion-control agent preferably includes glycoluril, but other agents to slow the dissolution of the halogen-containing oxidizer may be included. The glycoluril may be substituted or unsubstituted, and is most preferably of the structure: 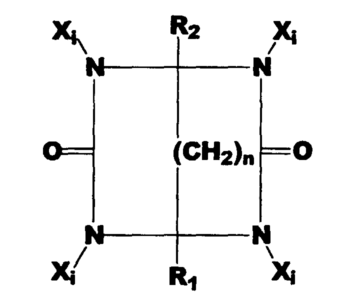 wherein R₁ and R₂ are each selected from the group consisting of hydrogen, lower alkyl groups of from 1 to 4 carbon atoms, and phenyl; each Xᵢ is selected from the group consisting of hydrogen, chlorine, and bromine; and n is either 0 or 1. As used herein, the term "glycoluril" includes all forms of glycoluril included within the above formula. The term "unsubstituted glycoluril" refers solely to glycoluril according to the foregoing formula in which each of the R₁, R₂, and Xᵢ is hydrogen.

It is to be appreciated that the all-in-one system can include also a variety of additional water treatment compounds such as algicides, fungicides, flocculents/clarifiers, sequestering agents, etc., to maintain water quality. This system therefore eliminates the necessity of adding these agents separately.

Accordingly, the slow-dissolving sanitizer formulation also preferably includes a boron-containing compound that exhibits algistatic and/or algicidal activity when added to water. Preferred boron-containing compounds are selected from the group consisting of boric acid, boric oxide (anhydrous boric acid), and compounds having the formula Mₙ,Bₓ,O_{y},·ZH₂O in which M is ammonia or any alkali metal or alkaline earth cation, including, but not limited to, sodium, potassium, calcium and magnesium; n is equal to 1, 2 or 3; x is any whole number from 2 to 10; Y is equal to 3X/2+1; and Z is equal to 0 to 18. The 3X/2+1 boron-containing compounds include, for example, disodium tetraborate, disodium octaborate, sodium pentaborate, sodium metaborate, dipotassium tetraborate, potassium pentaborate, diammonium tetraborate, ammonium pentaborate, and hydrates thereof. The boron-containing compound is preferably present in the slow-release sanitizer in amounts between about 2 to about 40 wt %, more preferably about 4 to about 20 wt % based upon the total weight of the slow-dissolving sanitizer composition.

The slow-dissolving halogen oxidizer composition may also include a flocculent such as aluminum sulfate (cake or patent alum). As is known to the art, aluminum sulfate is commonly available having a variety of different equivalent amounts of hydrated water, and any of the hydrated aluminum sulfates are acceptable for use with this invention. Preferably, aluminum sulfate having from 2 to 20 equivalents of water per mole of aluminum sulfate is used. In alternative embodiments, the aluminum sulfate is a hydrated potassium aluminum sulfate (alum) or hydrated sodium alum.

The aluminum sulfate concentration can be varied from about 2 to about 40 wt % or preferably from about 5 to about 30 wt % of the total weight of the slow-dissolving sanitizer. In a most preferred embodiment, the aluminum sulfate is present in an amount between about 8 to about 20 wt % of total weight of the slow-dissolving sanitizer.

The slow-dissolving sanitizer is preferably provided as a solid-formed material. In that material the halogenated hydantion or halogenated isocyanuric acid (or salts), the boron-containing compound, the erosion-control agent, and the aluminum salt, may all be contained. The components are preferably blended and formed into a tablet, puck, stick, or other solid form that is conveniently eroded into the water in conventional fashion, such as by placement in a skimmer basket, floater, or other halogen-releasing device.

Additional components such as binders, tableting aids, mold release agents, corrosion inhibitors, scale inhibitors and/or dyes may be incorporated into the tablets or pucks. The selection of such components and their incorporation into the solid-formed material is within the capability of those skilled in the art.

The second component of the all-in-one treatment system is a fast-release halogen oxidizer that is compatible with the slow-release sanitizer. This fast-release formulation is therefore useful to provides shock-treatment to the water.

As indicated above, the fast-release halogen oxidizer is preferably a rapidly dissolving formulation of the same halogen-containing oxidizer that was used in the slow-release formulation. For example, a. halogenated compound selected from the group consisting of halogenated hydantions and halogenated isocyanuric acids, or salts thereof, may be used.

The shock treatment composition preferably comprises about 40 to about 95 wt % of halogenated oxidizer, more preferably about 50 to about 75 wt % (based on the weight of the shock treatment composition), in a rapid-release formulation. As indicated above, halogenated isocyanuric acid compounds envisioned to be useful in the present invention as shock treatment compositions include trichloroisocyanuric acid, dichloroisocyanuric acid, tribromoisocyanuric acid, and dibromoisocyanuric acid, as well as the salts of those compounds such as sodium dichloroisocyanurate. Halogenated hydantoins envisioned to be useful as shock treatment compositions include bromochlorodimethylhydantoin, dibromodimethylhydantoin, bromochloromethylethylhydantoin, etc.

The fast-release formulations of the halogenated isocyanuric acid or halogenated hydantoin are preferably made by combining the halogen source with a dissolution aid. Most preferably, the dissolution aid is an anionic polymer such as a polyacrylic acid, polymethacrylic acid, polyvinylsulphonic acid, polyphosphino-carboxylic acid, hydroxy-alkyl propane sulfonic acid, acrylamido-methyl propane sulfonic acid, polystyrene sulphonic acid, polymaleic acid, or polyaspartic acid, or salts thereof. Additionally, copolymers, terpolymers, etc., of the aforementioned polymers may be used.

Preferably, the molecular weight of the anionic polymeric agent is about 500 Da to about 10,000,000 Da, while polymeric agents having a molecular weight between about 1,000 Da and about 100,000 Da are more preferred. Most preferred are 2,000 Da to 20,000 Da polymers.

In alternative embodiments the dissolution aid is a non-polymeric compound such as a carboxylic acid, hydroxy-carboxylic acid, polyphosphate, phosphonic acid, or crown ether. Most preferably, the non-polymeric dissolution aid is a carboxylic acid, or a hydroxy-carboxylic acid, or a salt thereof. By way of example only, appropriate carboxylic acids include oxalic acid, suberic acid, acetic acid, tricarballic acid, succinic acid, malonic acid, and maleic acid, although other carboxylic acids may be used. Also by way of example only, preferred hydroxy-carboxylic acids include citric acid, gluconic acid, tartronic acid, lactic acid, tartaric acid, malic acid, glyceric acid, and tetrahydroxy succinic acid, although others may be used in addition to, or as replacements for, those identified above.

As to the amounts of the dissolution aid used in the shock-release formulation, the shock-release formulation preferably contains about 10-25% dissolution aid. The specific amount of dissolution aid depends on the dissolution aid used, and the dissolution properties of the halogen-source material.

The fast-release (i.e., shock treatment) composition also preferably includes a copper salt that exhibits algistatic and/or algicidal activity. Specific copper salts that can be used in this invention include copper sulfate, copper acetate, copper formate, copper fluoride, copper halides, and mixtures thereof. The copper salts are present in the shock treatment composition in an amount of between about 3 to about 20 wt %, more preferably about 3 to about 12 wt %.

In the presence of oxidizers though, copper from the copper salts can precipitate, causing unsightly stains on surface of the pool and related equipment. Therefore, it is preferred to stabilize the copper salts in the water to avoid the formation of copper hydroxides, copper oxides, and copper carbonates. This can be accomplished by supplying a sequestering agent.

The sequestering agent is preferably present in an amount between about 5 to about 40 wt %, more preferably about 10 to about 25 wt % (based upon the total weight of the shock sanitizer material). As with the dissolution aid, the sequestering agent preferably is an anionic polymer such as a polyacrylic acid, polymethacrylic acid, polyvinylsulphonic acid, polyphosphino-carboxylic acid, hydroxy-alkyl propane sulfonic acid, acrylamido-methyl propane sulfonic acid, polystyrene sulphonic acid, polymaleic acid, or polyaspartic acid, having a molecular weight of about 500 Da to about 10,000,000 Da. Sequestering agents having a molecular weight between about 1,000 Da and about 20,000 Da are more preferred.

As to the relative amounts of the sequestering agent to copper salt employed in the shock treatment composition, preferably the shock treatment contains about 0.1 to about 10 mols. sequestering agent for each mol. of copper; more preferably, the shock treatment contains about 1.0 to 5.0 mols. of the sequestering agent for each mol. of copper.

Alternatively, the sequestering agent can include a non-polymeric compound such as a carboxylic acid, hydroxy-carboxylic acid, polyphosphate, phosphonic acid, or crown ether. Most preferably, the non-polymeric sequesterant is a carboxylic acid, or a hydroxy-carboxylic acid, or a salt thereof. By way of example only, appropriate carboxylic acids include oxalic acid, suberic acid, acetic acid, tricarballic acid, succinic acid, malonic acid, and maleic acid, although other carboxylic acids may be used. Also by way of example only, preferred hydroxy-carboxylic acids include citric acid, gluconic acid, tartronic acid, lactic acid, tartaric acid, malic acid, glyceric acid, and tetrahydroxy succinic acid, although others may be used in addition to, or as replacements for, those identified above.

Optionally, the shock treatment composition can include other additives, for example, fungicides, algicides, and flocculents/clarifiers. In one preferred embodiment, the shock treatment composition also includes a boron-containing compound. The boron-containing compounds are described above. The shock treatment can contain the boron-containing compound in amounts of about 10 to about 40 wt %, more preferably about 20 to about 35 wt % based upon the total weight of the shock treatment composition.

In the most preferred embodiments a polyacrylate dissolution aid is used in conjunction with a boron-containing compound such as borax. The combination of those two additives made haloisocyanuric acids dissolve faster than it would using either of those additives alone. Copper salts are also preferably included in these most preferred embodiments.

The shock treatment composition is preferably formed into a solid material, which can includes tablet, puck, stick, or other solid form. The solid material is formulated as rapidly dissolving solid material to provide a high concentration of free halogen, copper salts, sequestering agents and optionally boron containing compounds to the water to be treated.

As to the ratio of the slow-release composition to the fast-release composition, in preferred embodiments the ratio is between about 1:1 and about 10:1, more preferably from about 2:1 to about 3:1.

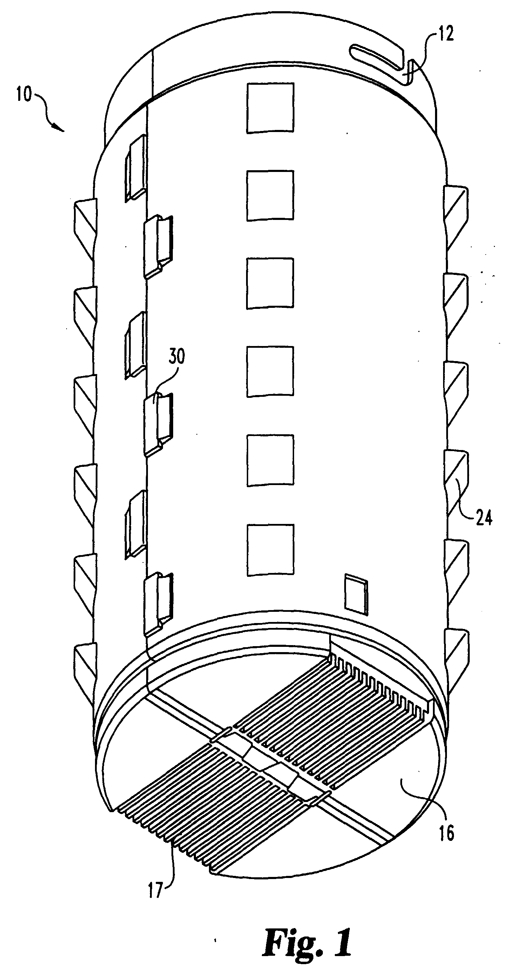

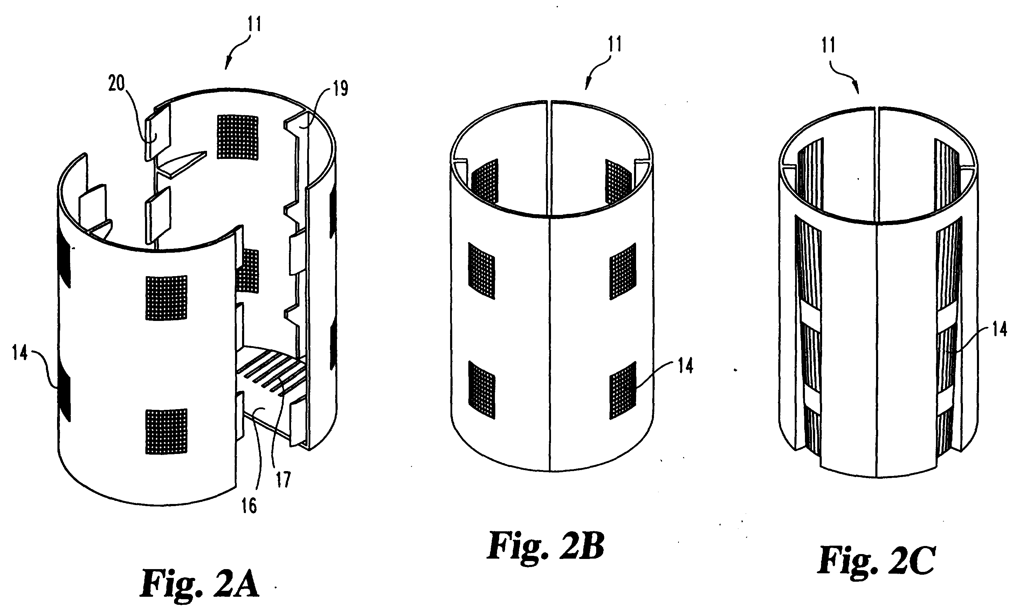

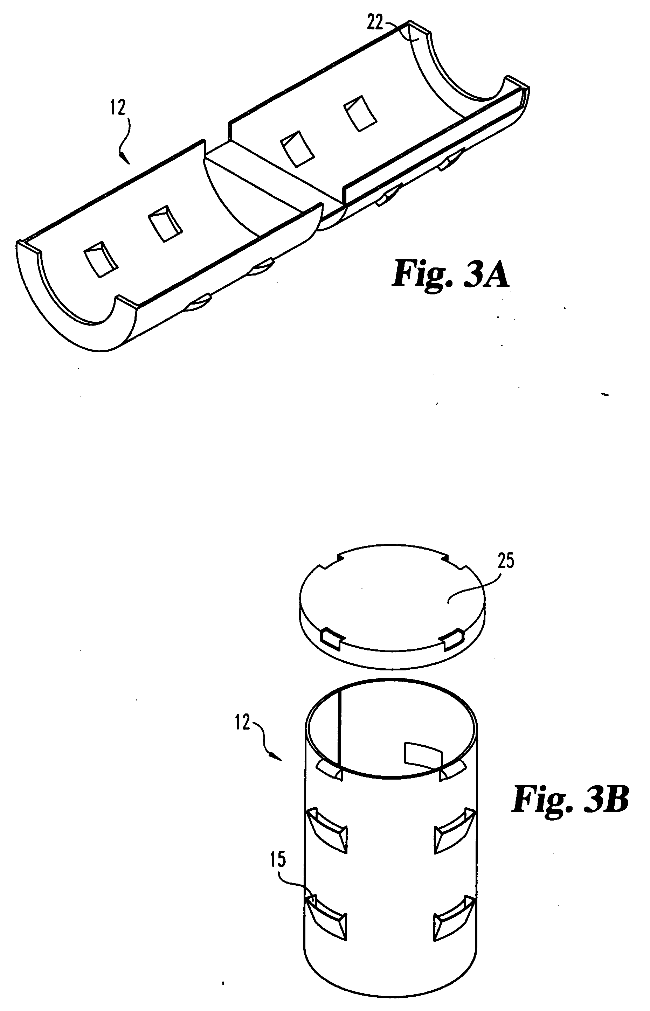

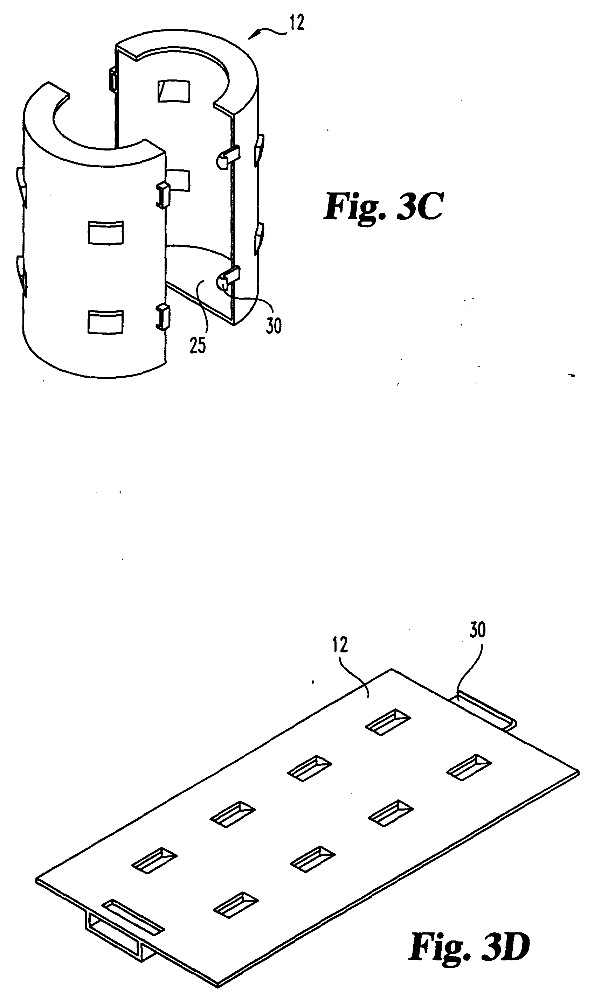

In one preferred embodiment of the present invention, the slow-dissolving composition and the fast-dissolving composition are housed within a single container that can be adjusted to control the rate of tablet dissolution. One such container is illustrated in FIGS. 1-3. Canister 10 includes an inner housing 11 with plurality of inner housing apertures 14, and an outer housing 12 with a plurality of outer housing apertures 15. The two housings are preferably cylindrical in shape, with the inside diameter of the outer housing being just slightly larger than the outside diameter of the inner housing, so that the inner housing fits snugly inside the outer housing. The outer housing is sufficiently large however, to allow the inner housing to turn (revolve about its longitudinal axis) therein.

In one preferred embodiment the inner housing is left open at one end, since that end will be covered by the outer housing. The other end of the inner housing may extend out of the outer housing (to allow it to be gripped and rotated within the outer housing), and therefore preferably terminates in an end piece 16 with slits 17 to allow water to pass therethrough.

The apertures of the inner housing preferably include spacers 19 to keep solid chemical from lodging against and clogging the apertures. The spacers are most preferably fashioned as ribs that protrude into the interior of the inner housing, and may include cutouts to position pucks of water treatment chemical. Most preferably, the number and size of the inner housing apertures is sufficient to allow an effective flow of water through the canister when the inner housing apertures are all "open." An effective flow is a flow which allows the water treatment chemical inside to be readily released into the water.

The inner housing is preferably made as a one-piece or two-piece construction. The two piece design preferably includes inner housing tabs 20 to hold the inner housing closed after assembly. These tabs may be "tamper resistant" to prevent their reuse after the inner housing is opened.

In one preferred embodiment the inner housing includes a groove 21 near one end (preferably the end with the end cap and slits) to receive a lip 22 of the outer housing as will be described below. The portion of the inner housing that extends past the groove is preferably large enough to allow it to be grasped and turned by the user to control the effective sizes of the canister openings.

The outer housing 12 fits snugly around the inner housing while still allowing the inner housing to turn (rotate about its longitudinal axis) inside the outer housing. In the most preferred embodiments, the two housings contact each other so that water does not flow between the housings.

The apertures 15 of the outer housing are positioned to line up with the apertures of the inner housing when the two housings are aligned for maximum water flow through the canister. Outer housing apertures 15 are also preferably sized to correspond to the size of inner housing apertures 14. In the most preferred embodiments, outer housing apertures 15 are provided with angled "covers" 24 that direct the flow of water through the aperture while simultaneously preventing consumers from coming into contact with the chemicals contained inside.

Outer housing 12 is preferably closed at one end, optionally with a cap 25. Outer end cap 25 may be a snap-on lid, or it may be formed integral with the housing walls. As with the inner housing, outer housing 12 is preferably a one-piece or a two-piece design.

In one preferred embodiment outer housing is provided with slots 31 at one end to attach a bayonet ring float (not shown). Alternatively, slots 31 are adapted to receive a canister float (not shown). As with the bayonet ring float design, the pin-in-slot design allows a float to be attached to one end of the canister so that the canister will be positioned just below the water line when in use. In a third preferred embodiment outer housing is provided with threads at one end to receive a threaded float (not shown).

In the preferred embodiments the canister of the present invention is provided with one or more tamper resistant tabs 30. These tabs allow the canister to be closed after the water treatment chemical is provided inside, yet prevent the canister from being reused. Most preferably, the tamper resistant tabs are rendered ineffective for reclosing the canister after being opened once. As indicated above, the tamper resistant tabs may be included in the inner housing, in the outer housing, or both.

For the purpose of promoting further understanding and appreciation of the present invention and its advantages, the following Examples are provided. It will be understood, however, that these Examples are illustrative and not limiting in any fashion.

### Example 1:

### Preparation of fast dissolving tablet (TCCA)

Fifty grams of dry TCCA was combined with 5 grams of copper sulfate pentahydrate, 27.5 grams of borax, 0.75 grams of boric acid, and 16.75 grams of dry sodium polyacrylate, and was mixed in a Patterson-Kelly blender for about 9 minutes. The blended formulation was then compressed, applying 20 metric tons of pressure for 0.2 minutes using a Carver Press. A solid white tablet with blue crystals was obtained.

### Example 2

### Determination of Dissolution Rate (TCCA)

Tests to determine the dissolution rate of the fast-dissolving tablets of Example 1 were performed. The results are listed in the table below. The percents of TCCA, copper sulfate, and boric acid were as follows 50%, 5%, and 0.75%, respectively. The remaining 45% was either polyacrylate (sodium polyacrylate with an average molecular weight of 4500 Da), or polyacrylate plus borax.

The tablets were tested in a 5,000 gallon pool equipped with six skimmers. The flow rate through each skimmer was maintained at approximately 30 gallons/minute.

| Polyacrylate | Borax | Dissolution Rate (g/hour) |
|---|---|---|
| 45.0 | 0 | 13.1 |
| 12.0 | 32.2 | 26.7 |
| 14.4 | 29.9 | 40.0 |
| 16.7 | 27.5 | 38.0 |

### Example 3

### Determination of Dissolution Rate (TCCA)

Tests to determine the dissolution rate of alternative fast-dissolving tablets were performed. The results are listed in the table below. The percents of TCCA, copper sulfate, and polymer were as follows 50%, 5%, and 45%, respectively.

The tablets were tested in a 5,000 gallon pool equipped with six skimmers. The flow rate through each skimmer was maintained at approximately 30 gallons/minute.

| Polymer | Dissolution Rate (g/hour) |
|---|---|
| Versa TL-3 (Sulfonated Styrene/ Maleic Anhydride Copolymer) | 65.38 |
| Aquatreat AR-540-D (Acrylic Copolymer) | 83.09 |

### Example 4

### Preparation and Dissolution Rate of Slow Dissolving Tablets

Slow-dossolving tablets containing 72% TCCA, 18% aluminum sulfate, 7% sodium tetraborate, 2% glycouril, and 1% boric acid are prepared as described above. These patented (U.S. Patent No. 5,648,314) slow dissolving tablets were tested in a 5,000 gallon pool equipped with six skimmers. The flow rate through each skimmer was maintained at approximately 30 gallons/minute. The slow dissolving tablets dissolved at a rate of about 7 grams/hour.

### Example 5

### Dissolution Rates for Alternative Slow-Dissolving Tablets

Tests to determine the dissolution rate of some alternative slow-dissolving tablets were performed. The results are listed in the table below. Each tablet contains 5% copper sulfate, and other components as indicated below.

The tablets were tested made and compressed as described above, and were then tested in a 5,000 gallon pool equipped with six skimmers. The flow rate through each skimmer is maintained at approximately 30 gallons/minute.

| TCCA | Aluminum Sulfate | Sodium Tetraborate | Polyacrylate | Dissolution Rate (g/hour) |
|---|---|---|---|---|
| 95 | 0 | 0 | 0 | 0.772 |
| 50 | 45 | 0 | 0 | 0.477 |
| 50 | 0 | 45 | 0 | 6.23 |

### Example 6

### Preparation of fast dissolving tablet (BCDMH)

Eighty-two grams of BDMH was combined with 3 grams of copper sulfate pentahydrate and fifteen grams of dry sodium polyacrylate. This formulation was mixed in a Patterson-Kelly blender for about 9 minutes. The blended formulation was then compressed applying 20 metric tons of pressure for about 2 minutes using a Carver Press. This formulation yields a white tablet with blue crystals.

### Example 7

### Dissolution Rate (BCDMH)

Tests to determine the dissolution rate of some preferred fast-dissolving tablets were performed. The results are listed in the table below. The percents of BCDMH, copper sulfate, and polymer were as follows 82%, 3%, and 15% respectively. The tablets were tested in a 5,000 gallon pool equipped with six skimmers. The flow rate through each skimmer was maintained at approximately 30 gallons/minute.

| Polymer | Dissolution Rate (g/hour) |
|---|---|
| Versa TL-3 (Sulfonated Styrene/ Maleic Anhydride Copolymer) | 50.62 |
| Aquatreat AR-540-D (Acrylic Copolymer) | 46.02 |

### Example 8

### Chlorine Levels

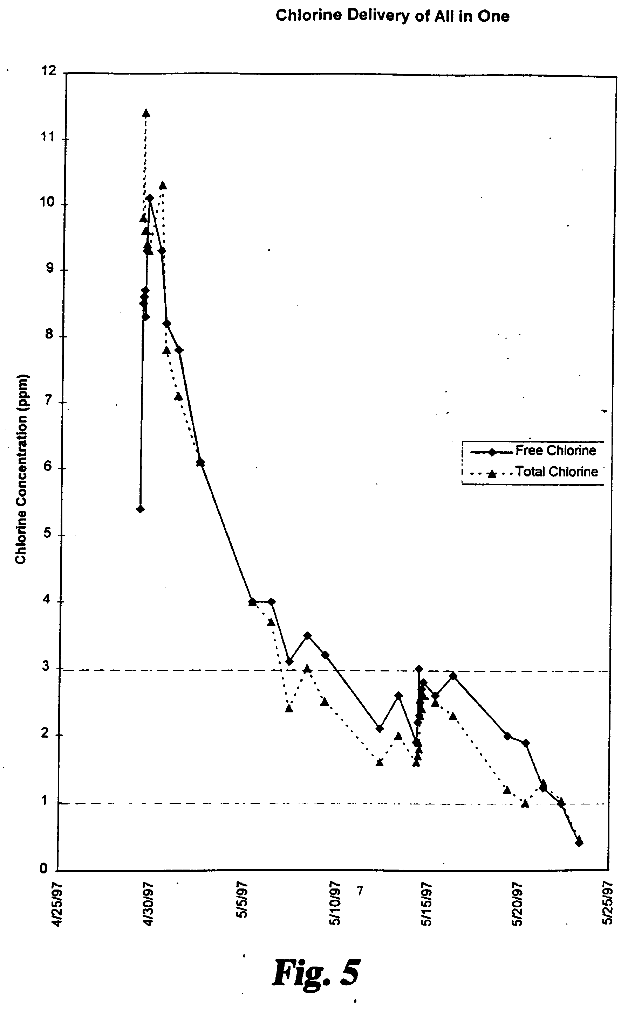

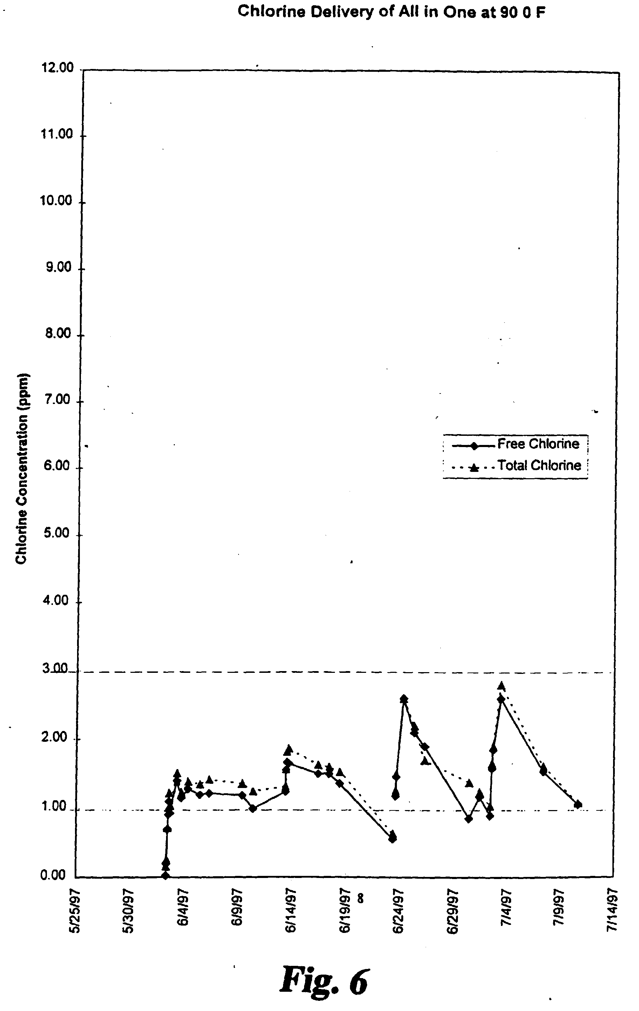

Two fast-dissolving tablets were combined with four slow-dissolving tablets and placed into a plastic canister. The filled canister was placed into a skimmer basket in a 20,000 gallon pool. Chlorine levels in the pool were monitored at least three times a week over a three-month period. The results are illustrate in FIG. 5 as a graph. The graph plots the chlorine levels measured over the first month that the canister was in the pool skimmer verses time. The water was maintained at a temperature between 70-80°F for the first month. During this time the chlorine was maintained at a 1-3 ppm chlorine residual. In FIG. 6 is illustrated a graph plotting the chlorine levels measured over the second and third months. To further challenge the system, the chlorine level was allowed to drop while the water temperature was raised to 90°F. Even at higher water temperatures, the all-in-one water treatment system is still effective. The periodic increases in chlorine concentration evident on the two graphs depicted in FIGS. 5 and 6 represent times when a new canister was added to the pool skimmer. Shortly after the addition of the canister, the chlorine level increases. This increase is a result of the fast-dissolving tablets that provide a shock to the pool. From the data, it is also evident that the combination of these tablets provides enough chlorine to maintain 2-4 ppm free chlorine, as recommended by NSPI for proper pool sanitation.

While the invention has been illustrated and described in detail in the drawings and foregoing description, the same is considered to be illustrative and not restrictive in character, it is understood that only the preferred embodiments have been shown and described and that all changes and modifications that come within the spirit of the invention are desired to be protected. Moreover, all publications, patents, and patent applications cited in this specification are herein incorporated by reference as if each individual publication, patent, or patent application was specifically and individually indicated to be incorporated by reference and set forth in its entirety herein.

## Claims

1. An all-in-one water treatment system for simultaneously providing a slow-release sanitizing composition and a shock treatment composition to water, said sanitizer system comprising:
(a) a slow-release sanitizing composition comprising a slow-release formulation of a halogen-containing oxidizer selected from the group consisting of halogenated isocyanuric acids and halogenated hydantoins, and salts thereof; and
(b) a shock treatment composition comprising a fast-release formulation of a halogen-containing oxidizer selected from the group consisting of halogenated isocyanuric acids and halogenated hydantoins, and salts thereof;
wherein said slow-release sanitizing composition and said shock treatment composition are formulated from the same halogenated isocyanuric acid or halogenated hydantoin species.

2. The water treatment system of claim 1 wherein the halogenated isocyanuric acid comprises a trichloroisocyuranic acid or a dichloroisocyuranic acid, or a salt thereof, and the halogenated hydantoin comprises a 1-bromo-3-chloro-5,5-dimethylhydantoin, a 1,3-dichloro-5,5-dimethylhydantoin, a 1,3-dibromo-5,5-dimethylhydantoin, a 1-bromo-3-chloro-5,5-methylethylhydantoin, or a 1,3-dichloro-5,5-methylethylhydantoin, or a salt thereof.

3. The water treatment system of claim 1, wherein said shock treatment composition further includes a dissolution aid.

4. The water treatment system of claim 3, wherein said dissolution aid comprises an anionic polymer.

5. The water treatment system of claim 4, wherein said anionic polymer comprises a polyacrylic acid, polymethacrylic acid, polyvinylsulphonic acid, polystyrene sulphonic acid, polymaleic acid, or polyaspartic acid, and salts thereof.

6. The water treatment system of claim 3, wherein said dissolution aid comprises a non-polymeric compound selected from the group consisting of carboxylic acids, hydroxy-carboxylic acids, polyphosphino-carboxylic acids, polyphosphates, phosphonic acids, and crown ethers.

7. The water treatment system of claim 1, wherein said wherein said shock treatment sanitizing composition further includes a copper salt.

8. The water treatment system of claim 7, wherein said wherein said copper salt is selected from the group consisting of copper sulfate, copper acetate, copper formate, and copper chloride, and mixtures thereof.

9. The water treatment system of claim 1, wherein said shock treatment sanitizing composition further includes a boron-containing compound.

10. The water treatment system of claim 1, and further including a wherein said boron-containing compound is selected from sodium tetraborate, potassium tetraborate, and boric acid, and mixtures thereof.
